# EUROPÄISCHE PATENTSCHRIFT

(11) **EP 1 030 101 B1**
(45) Veröffentlichungstag und Bekanntmachung des Hinweises auf die Patenterteilung: **13.10.2004**
(21) Anmeldenummer: 00102185.6
(22) Anmeldetag: 09.02.2000
(51) Int. Cl.: F21S 8/10

(54) **Fahrzeugscheinwerfer**
Vehicle headlamp
Projecteur pour véhicule

(30) Priorität: 17.02.1999 DE 19906527
(43) Veröffentlichungstag der Anmeldung: 23.08.2000
(73) Patentinhaber: Volkswagen Aktiengesellschaft, 38436 Wolfsburg (DE)
(72) Erfinder: Linde, Norbert, 38550 Isenbüttel (DE)
(74) Vertreter: Rabe, Andreas

(56) Entgegenhaltungen:
- DE-A- 4 127 402
- US-A- 5 562 338

## Beschreibung

Die Erfindung betrifft einen Fahrzeugscheinwerfer mit einer Abdeckscheibe und einem Gehäuse, in dem ein Doppel-Ellipsoid-Scheinwerfer angeordnet ist, der eine Glühlampe mit einem Reflektor aufweist, wobei zwischen dem Reflektor und der Abdeckscheibe eine Linse an dem Reflektor mit Hilfe eines Linsenhalters angeordnet ist und wobei eine Blende vorgesehen ist, die eine konische sich in Lichtabstrahlrichtung erweiternde Form aufweist.

Ein solcher Fahrzeugscheinwerfer ist aus der DE 41 27 402 A1 bekannt. Der Doppel-Ellipsoid-Scheinwerfer ist hier eine Nebelleuchte und die Blende wird von einem Schutzteil gebildet, der den Zwischenraum zwischen der Linse und dem Scheinwerfergehäuse sowie den Raum zwischen dem Scheinwerfergehäuse und dem Reflektor bedeckt.

Fahrzeugscheinwerfer dienen der Verkehrssicherheit. Mit Ihrer Hilfe wird bei Dunkelheit oder schlechter Sicht die Fahrbahn vor dem Kraftfahrzeug ausgeleuchtet. Darüber hinaus sind entgegenkommende Fahrzeuge durch ihre eingeschalteten Scheinwerfer bereits in großer Entfernung erkennbar.

Wegen des starken Einflusses des Fahrzeug-Designs auf das Image eines Kraftfahrzeugs unterliegen Fahrzeugscheinwerfer heute stärker als bisher Einflüssen des Fahrzeug-Designs. Daher sind mittlerweile bei der Konstruktion und Gestaltung von Scheinwerfern für Fahrzeuge Randbedingungen zu berücksichtigen, die vor wenigen Jahren bei der Entwicklung und Konstruktion von Fahrzeugscheinwerfem keine oder nur eine untergeordnete Rolle gespielt haben. So wird beispielsweise mittlerweile bei Fahrzeugscheinwerfern eine brillante transparente Erscheinung der Leuchte angestrebt. Hierzu finden brillante transparente Abdeckscheiben Verwendung, die einen verspiegelten Reflektor abdecken.

Aufgrund der brillanten Scheiben der Fahrzeugscheinwerfer ist ein sehr guter Einblick in die Scheinwerfer von außen möglich. In der Regel sind dabei hinter der Abdeckscheibe mehrere Reflektoren angeordnet. Die Reflektoren sind in diesen sogenannten Gehäusescheinwerfern beweglich angeordnet, um eine Einstellung beispielsweise zur Leuchtweitenregulierung in Abhängigkeit zum Beladungszustand des jeweiligen Kraftfahrzeugs, zu gewährleisten. Die Scheinwerferhersteller sind dabei bemüht, aus optischen Gründen die Spalte zwischen den einzelnen Reflektoren hinter der Abdeckscheibe klein zu halten. Dies führt zur dem Wunsch, den größtmöglichen Reflektordurchmesser des jeweiligen Scheinwerfers hinter der Abdeckscheibe zu realisieren.

Beim Einbau von Reflektoren mit großen Durchmessern tritt jedoch häufig das Problem auf, daß nicht allein der vergrößerte Durchmesser einen höheren Platzbedarf hervorruft, sondern auch andere Maße negativ beeinflußt werden. So ist beispielsweise bei Doppel-Ellipsoid-Scheinwerfern (DE-Scheinwerfer) mit einer Durchmesservergrößerung des Reflektors gleichzeitig eine Vergrößerung der jeweiligen Bautiefe des DE-Moduls hervorgerufen. Dies führt zu einer ungünstigen Einbausituation, da das Gehäuse, in welches der Scheinwerfer eingebaut ist, eine größere Tiefe aufweisen muß. Der Einbau von Scheinwerfern mit großer Einbautiefe ist jedoch wegen des geringen Platzangebots zwischen Fahrzeugfront und dem für den Motor des Fahrzeugs und dessen Nebenaggregaten benötigten Bauraum nur begrenzt möglich. Darüber hinaus sind insbesondere bei Doppel-Ellipsoid-Scheinwerfern die jeweiligen Module mit größerem Durchmesser sehr viel teuerer als die Module mit kleinem Durchmesser.

Hier will die Erfindung Abhilfe schaffen. Der Erfindung liegt die Aufgabe zugrunde, eine Möglichkeit zu schaffen, die in optischer Hinsicht erzielten Ergebnisse durchmessergroßer DE-Module durch durchmesserkleinere DE-Module zu realisieren und dabei die Einbaugegebenheiten der größeren Module zu nutzen, wobei vorhandene Spalte möglichst verdeckt werden sollen. Gemäß der Erfindung wird diese Aufgabe dadurch gelöst, daß die Blende, die eine konische sich in Lichtabstrahlrichtung erweiternde Form aufweist, den Doppel-El= lipsoid-Scheinwerfer fixiert.

Mit der Erfindung ist eine Möglichkeit geschaffen, kleinere DE-Module zu verwenden und gleichzeitig einen zu größeren DE-Modulen gleichwertig hohen optischen Eindruck für den Betrachter des Fahrzeugscheinwerfers hervorzurufen. Darüber hinaus sind die Kosten wegen der verwendeten Scheinwerfermodule mit kleinerem Durchmesser reduziert. Der vorhandene Spalt zwischen dem verwendeten durchmesserkleineren DE-Modul in der für größere Module vorgesehenen Aufnahme wird durch die konische sich in Lichtaustrittsrichtung erweiternde Blende verdeckt. Das von außen einfallende Licht wird in der trichterförmigen Blende eingefangen und reflektiert. Ein dunkler Spaltraum wird dadurch vermieden.

In Ausgestaltung der Erfindung hat die Blende eine konische Form. Mit Hilfe der konischen Form ist die Blende nach Art eines Designrings ausgestaltet. Sie trägt hierdurch zu einem hochwertigen optischen Eindruck des DE-Scheinwerfers bei.

In Weiterbildung der Erfindung hält die Blende eine Lichtscheibe, die einen Vergrößerungseffekt hat. Dadurch wirkt der eingebaute kleinere DE-Scheinwerfer auf den Betrachter wie ein durchmessergroßer DE-Scheinwerfer, wodurch der optische Eindruck zusätzlich erhöht ist.

Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im einzelnen beschrieben. Es zeigen:
- Figur 1: einen Vertikalschnitt durch einen Fahrzeugscheinwerfer und
- Figur 2: einen Horizontalschnitt durch den in Figur 1 dargestellten Scheinwerfer.

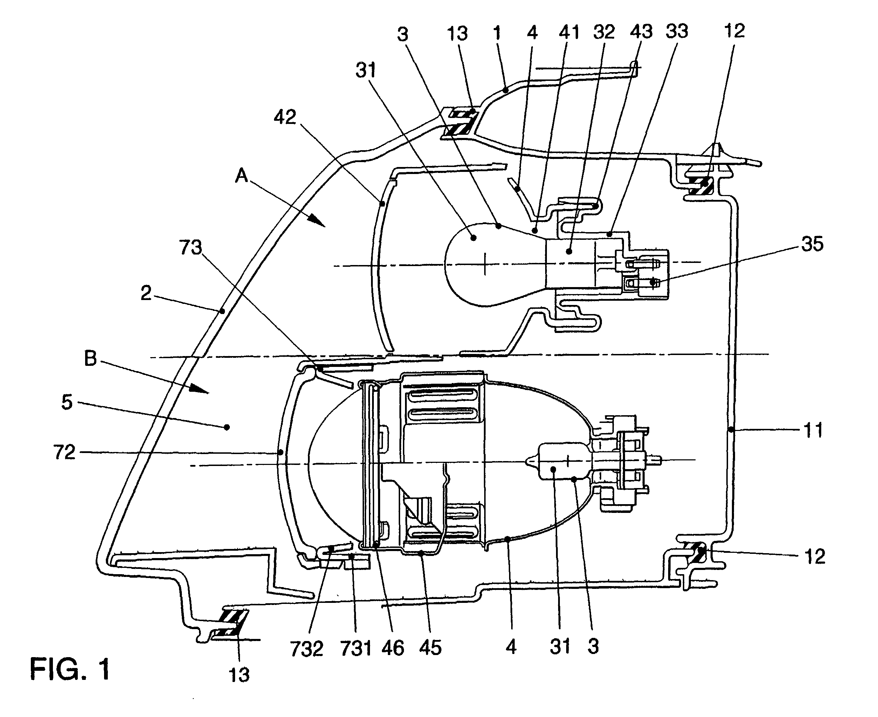

Bei dem im Ausführungsbeispiel dargestellten Fahrzeugscheinwerfer handelt es sich um einen Kombinationsscheinwerfer. Bei dem dargestellten Scheinwerfer sind hinter der Abdeckscheibe ein Fahrtrichtungsanzeiger A und ein Nebelscheinwerfer B im Schnitt dargestellt - Figur 1 -. Der Nebelscheinwerfer B ist hinter der Abdeckscheibe vertikal schwenkbar angeordnet, um eine Leuchtweitenregulierung zu ermöglichen. Es handelt sich um einen Doppel-Ellipsoid-Nebelscheinwerfer.

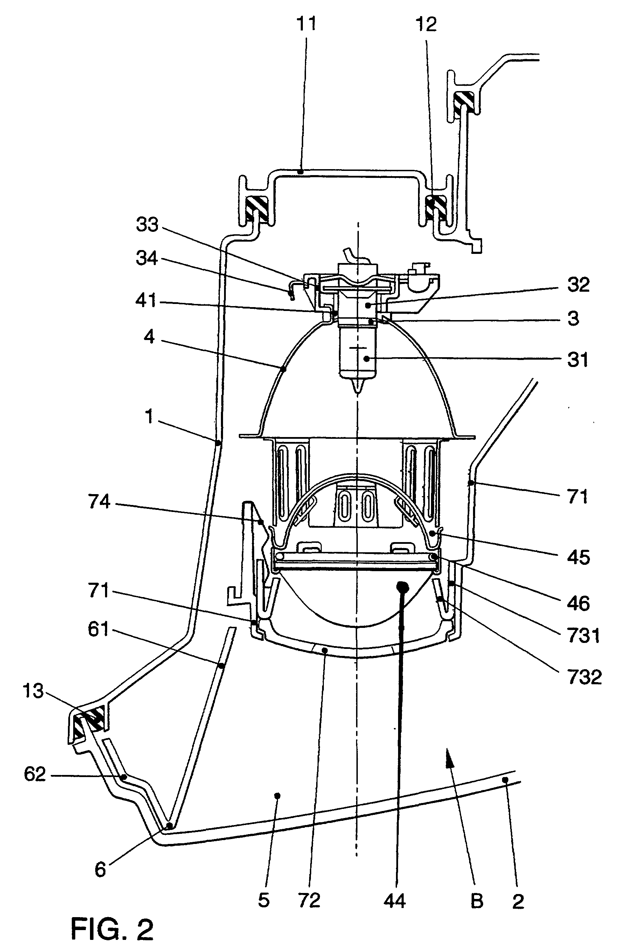

Der Fahrzeugscheinwerfer weist ein Gehäuse 1 auf. An dem Gehäuse 1 ist eine Abdeckscheibe 2 angeordnet. Die Abdeckscheibe 2 ist im Ausführungsbeispiel brillant und transparent ausgebildet. In dem Gehäuse 1 sind mehrere Glühlampen 3 angeordnet. Die Glühlampen 3 sind jeweils in einen Reflektor 4 eingesetzt. Zwischen Reflektor 4 und der Abdeckscheibe 2 ist jeweils eine Leuchtenkammer 5 ausgebildet. Die Leuchtenkammer 5 ist auf einer Seite durch einen Abdeckrahmen 6 begrenzt - Figur 2-.

Das Gehäuse 1 ist auf seiner der Abdeckscheibe 2 abgewandten Seite mit einer Kappe 11 versehen. Die Kappe 11 ist gegenüber dem Gehäuse 1 mit Dichtungen 12 abgedichtet. Die Kappe 11 ist vorgesehen, um den Austausch der Glühlampen 3 zu ermöglichen. Auf seiner der Kappe 11 abgewandten Seite ist das Gehäuse 1 mit einer Dichtung 13 versehen, in der die Abdeckscheibe 2 eingebettet ist. Durch die Dichtungen 12 und 13 ist gewährleistet, daß der Fahrzeugscheinwerfer gegen Eintritt von Wasser abgedichtet ist.

Die Glühlampen 3 weisen jeweils einen Glaskolben 31 auf. Der Glaskolben 31 ist mit Gas gefüllt. Der Glaskolben 31 ist auf einem Lampensockel 32 angeordnet. Der Lampensockel 32 ist in eine Lampenfassung 33 eingesetzt. An der Fassung 33 ist bei dem Nebelscheinwerfer B eine Haltefeder 34 vorgesehen. An dem Fahrtrichtungsanzeiger A ist auf der der Abdeckscheibe 2 abgewandten Seite ein Kontaktteil 35 erkennbar, mit dem die Glühlampe 3 des Fahrtrichtungsanzeigers A mit Strom versorgt wird - Figur 1 -. Die Stromversorgung des Nebelscheinwerfers B erfolgt in ähnlicher Weise, ist jedoch nicht im einzelnen dargestellt.

An der Lampenfassung 33 ist der Reflektor 4 angeordnet. In dem Reflektor 4 ist eine runde Öffnung 41 vorgesehen, durch die die Glühlampe 3 mit ihrem Sockel 32 hindurchtritt. Der Reflektor 4 ist auf seiner der Abdeckscheibe 2 zugewandten Seite reflektierend beschichtet. Um eine hohe Lichtausbeute zu erreichen, kann diese Seite des Reflektors 4 verspiegelt sein, was besonders günstig durch Aufdampfen einer Metallschicht erreichbar ist.

Bei dem dargestellten Fahrtrichtungsanzeiger A ist vor dem Reflektor 4 eine Lichtscheibe 42 vorgesehen. Auf der der Abdeckscheibe 2 abgewandten Seite des Reflektors 4 ist in die Lampenfassung 33 ein O-Ring 43 eingesetzt, gegen den sich der Reflektor 4 abstützt. Bei dem dargestellten Doppel-Ellipsoid-Nebelscheinwerfer B ist zwischen dem Reflektor 4 und der Abdeckscheibe 2 eine Linse 44 mit Hilfe eines Linsenhalters 45 an dem Reflektor angeordnet. Die Linse 44 ist an dem Linsenhalter 45 mit Hilfe eines Sprengrings 46 gehalten.

Die Leuchtenkammer 5 ist seitlich jeweils begrenzt durch den Abdeckrahmen 6 - Figur 2 -. Der Abdeckrahmen 6 ist mit dem Gehäuse 1 verbunden. Im Ausführungsbeispiel hat der Abdeckrahmen 6 eine im wesentlichen spitzwinklige Form, die aus zwei Schenkeln 61 und 62 gebildet ist. Der Schenkel 62 ist von seiner Form her an die Kontur der Abdeckscheibe 2 angepaßt.

Vor dem DE-Nebelscheinwerfer B ist eine Aufnahme 71 vorgesehen - Figur 2 -. Die Aufnahme 71 ist mit dem Gehäuse 1 verbunden. Die Aufnahme 71 endet in der Leuchtenkammer 5. Sie nimmt eine Lichtscheibe 72 auf. Die Lichtscheibe 72 ist in der Aufnahme mit Hilfe einer Blende 73 gehalten. Die Blende 73 fixiert den DE-Nebelscheinwerfer und hat eine spitzwinklige Form. Sie besteht aus zwei Schenkeln 731 und 732, wodurch eine konische Form der Blende 73 hervorgerufen ist. Die Blende 73 ist in der Aufnahme 71 mit Hilfe einer Haltefeder 74 gehalten. Im Ausführungsbeispiel handelt es sich bei dem Doppel-Ellipsoid-Nebelscheinwerfer um ein sogenanntes 50 mm-Modul; es hat einen Durchmesser von 50 mm. Die Aufnahme 71 hat dagegen einen Durchmesser von 60 mm. Auch die Lichtscheibe 72 hat dementsprechend einen Durchmesser von 60 mm. Durch Verwendung der Blende 73 ist es möglich einen duchmesserkleineren Modul in eine durchmessergrößere Aufnahme einzubauen. Die Lichtscheibe 72 hat einen Vergrößerungseffekt und wirkt somit als zusätzliche Linse. Das verwendete 50 mm-Modul wirkt dadurch nach außen wie ein 60 mm-Modul, ohne den Nachteil der erhöhten Baulänge sowie der erhöhten Kosten aufzuweisen.

Bei Weglassen der Blende 73 kann in die Aufnahme 71 auch ein 60 mm-Modul eingebaut werden. Dies ist selbstverständlich nur dann möglich, wenn die im Gehäuse 1 vorgesehenen Baumaße einen Einbau insbesondere wegen der größeren Baulänge eines 60 mm-Moduls ermöglichen. Weiterhin kann die Lichtscheibe 72 weggelassen werden. Dadurch tritt zwar der optische Vergrößerungseffekt nicht auf, technisch funktioniert der Scheinwerfer dadurch aber ebenso gut und der Vorteil der Kostenreduktion ist ebenfalls verwirklicht. Darüber hinaus kann anstelle eines 50 mm-Moduls auch ein 40 mm-Modul verwendet werden, wenn eine angepaßte Blende 73 zum Einsatz kommt. Dadurch wird der benötigte Einbauraum zusätzlich reduziert und die Kosten nochmals gesenkt.

Durch die spitzwinklige - konische - Form der Blende 73 ist darüber hinaus ein optisch geschlossener Übergang zwischen Lichtscheibe 72 und DE-Modul hergestellt; es tritt kein Spalt zur DE-Linse auf. Hierdurch ist ein höherwertiger Designeindruck des Scheinwerfers hervorgerufen.

### BEZUGSZEICHENLISTE

- A: Fahrtrichtungsanzeiger
- B: Nebelscheinwerfer

- 1: Gehäuse
- 2: Abdeckscheibe
- 3: Glühlampen
- 4: Reflektor
- 5: Leuchtenkammer
- 6: Abdeckrahmen

- 11: Kappe
- 12: Dichtung
- 13: Dichtung

- 31: Glaskolben
- 32: Lampensockel
- 33: Lampenfassung
- 34: Haltefeder
- 35: Kontaktteil

- 41: Öffnung
- 42: Lichtscheibe
- 43: O-Ring
- 44: Linse
- 45: Linsenhalter
- 46: Sprengring

- 61: Schenkel
- 62: Schenkel

- 71: Aufnahme
- 72: Lichtscheibe
- 73: Blende
- 74: Haltefeder
731 Schenkel
732 Schenkel

## Patentansprüche

1. Fahrzeugscheinwerfer mit einer Abdeckscheibe (2) und einem Gehäuse (1), in dem ein Doppel-Ellipsoid-Scheinwerfer (B) angeordnet ist, der eine Glühlampe (3) mit einem Reflektor (4) aufweist, wobei zwischen dem Reflektor (4) und der Abdeckscheibe (2) eine Linse (44) an dem Reflektor (4) mit Hilfe eines Linsenhalters (45) angeordnet ist und wobei eine Blende (73) vorgesehen ist, die eine konische sich in Lichtabstrahlrichtung erweiternde Form aufweist, **dadurch gekennzeichnet, dass** die Blende (73) den Doppel-Ellipsoid-Scheinwerfer fixiert.

2. Fahrzeugscheinwerfer nach Anspruch 1, **dadurch gekennzeichnet, daß** die Blende (73) eine Lichtscheibe (72) hält, die einen Vergrößerungseffekt hat.

3. Fahrzeugscheinwerfer nach einem der Ansprüche 1 oder 2, **dadurch gekennzeichnet, daß** die Blende (73) in einer Aufnahme (71) angeordnet ist.

4. Fahrzeugscheinwerter nach Anspruch 3, **dadurch gekennzeichnet, daß** die Blende (73) in der Aufnahme (71) mit Hilfe einer Haltefeder (74) gehalten ist.

## Claims

1. Vehicle headlamp having a cover plate (2) and a housing (1), in which a double ellipsoid headlamp (B) is arranged, the headlamp having an incandescent lamp (3) with a reflector (4), with, between the reflector (4) and the cover plate (2), a lens (44) being arranged on the reflector (4) with the aid of a lens holder (45), and with a cover (73) which has a conical shape widening in the light-radiating direction being provided, **characterized in that** the cover (73) fixes the double ellipsoid headlamp in place.

2. Vehicle headlamp according to Claim 1, **characterized in that** the cover (73) holds a diffusion lens (72) which has an enlarging effect.

3. Vehicle headlamp according to either of Claims 1 and 2, **characterized in that** the cover (73) is arranged in a holder (71).

4. Vehicle headlamp according to Claim 3, **characterized in that** the cover (73) is held in the holder (71) with the aid of a retaining spring (74).

## Revendications

1. Projecteur pour véhicule comprenant un verre de recouvrement (2) et un boîtier (1), dans lequel est disposé un projecteur à double ellipsoïde (B), qui présente une lampe à incandescence (3) avec un réflecteur (4), une loupe (44) étant disposée sur le réflecteur (4) entre le réflecteur (4) et le verre de recouvrement (2) à l'aide d'un porte-loupe (45) et un obturateur (73) étant prévu, lequel présente une forme conique s'élargissant dans la direction de diffusion de la lumière, **caractérisé en ce que** l'obturateur (73) fixe le projecteur à double ellipsoïde.

2. Projecteur pour véhicule selon la revendication 1, **caractérisé en ce que** l'obturateur (73) porte un verre extérieur (72) qui a un effet de grossissement.

3. Projecteur pour véhicule selon l'une quelconque des revendications 1 ou 2, **caractérisé en ce que** l'obturateur (73) est disposé dans un logement (71).

4. Projecteur pour véhicule selon la revendication 3, **caractérisé en ce que** l'obturateur (73) est maintenu dans le logement (71) à l'aide d'un ressort de fixation (74).
